# EUROPEAN PATENT APPLICATION

(11) **EP 2 966 500 A1**
(43) Date of publication of application: **13.01.2016**
(21) Application number: 14176552.9
(22) Date of filing: 10.07.2014
(51) Int. Cl.: G03B 15/03, G03B 17/08, G03B 17/12, B60R 11/04

(54) **Filtering device for a night vision system**

(71) Applicant: Orlaco Products B.V., 3772 MN Barneveld (NL)
(72) Inventor: van den Brink, Alfred, 3771 RN Barneveld (NL)
(74) Representative: Nederlandsch Octrooibureau

(57) **Abstract**

The present invention relates to a vision system for providing exterior view for a vehicle driver, the system comprising an image capturing device (2) for capturing images in a field of view, and a housing (1) for accommodating the image capturing device (2) therein. According to the invention, a moveable window (4) having entrance window sections (6, 7) allows optimal choice of entrance window properties and provide an optimal view under all circumstances. A first entrance window section (7) may for example filter infrared light. A source (11) may for example emit infrared light to provide view in dim or darkness in conjunction with the second entrance window section (6).

## Description

### Background

The present invention relates to a vision system for providing exterior view for a vehicle driver, the system comprising an image capturing device for capturing images in a field of view, and a housing for accommodating the image capturing device therein.

Such a system is known from EP2353940A1.

In general, vision system for vehicles provide a poor view during night or in low light conditions. Therefore there is a need for improvement in the field of vision systems for providing exterior vehicle view.

### Summary of the invention

The invention aims to provide a vision system for providing exterior view for a vehicle driver, which system has improved night vision.

Another object of the invention is to improve known vision systems for providing exterior view for a vehicle driver, in that a problem associated therewith is at least partly solved.

Yet another object of the invention is to provide an alternative vision system for providing exterior view for a vehicle driver.

According to a first aspect of the invention this is realized with a vision system for providing exterior view for a vehicle driver, the system comprising;
- an image capturing device for capturing images in a field of view,
- a housing for accommodating the image capturing device therein, the housing comprising a first stationary housing part and a second housing part coupled with the first stationary housing part for accommodating the image capturing device in the housing, and wherein the second housing part comprises an entrance window for allowing an image to be captured by the image capturing device, and wherein the second housing part is moveable coupled with the first stationary housing part, and movable in a housing moving direction around a central axis,
- a driving device coupled with the housing for moving the second housing part with respect to the first housing part in the housing moving direction and positioning the second housing part with respect to the image capturing device,
- a source of radiation for radiating the field of view,
and wherein the entrance window comprises at least a first and a second entrance window section wherein the first entrance window section is suitable for use during daylight conditions and the second entrance window section is suitable for use in dim or darkness in conjunction with the source of radiation, and wherein the at least first and second entrance window sections are arranged with respect to the housing moving direction such that the at least first and second entrance window sections extend alternately over the image capturing device upon moving the second housing part for allowing an image to be captured by the image capturing device through alternately the first entrance window section or the second entrance window section.

According to the invention, the moveable window having entrance window sections allows optimal choice of entrance window properties and provide an optimal view under all circumstances. A first entrance window section may for example filter infrared light. The source may for example emit infrared light to provide view in dim or darkness in conjunction with the second entrance window section.

It will be clear that the first housing part is stationary with respect to the second housing part. It may be conceivable that the housing is movably mounted with a vehicle to adjust the field of view as desired.

In an embodiment, the vision system comprises a control unit coupled with the driving device for controlling the position of the entrance window, wherein the image capturing device is operationally coupled with the control unit for providing a control signal from the image capturing device to the control unit. This way, a position sensor for the second housing part is not required, since the image capturing device gives feedback on whether the right entrance window section extends over the image capturing device.

In an embodiment, the source of radiation is operationally coupled with the control unit, and the source of radiation is arranged for allowing at least a part of emitted radiation to affect directly on the image capturing device. The source of radiation being arranged for allowing at least a part of emitted radiation to affect directly on the image capturing device enables to measure a difference between directly captured radiation and radiation reflected by the surroundings which provides a robust measurement. The source of radiation may be arranged in the interior of the housing and/or exterior with respect to the housing. It is conceivable that a portion of the source of radiation is arranged in the interior of the housing and another portion of the source of radiation is arranged exterior with respect to the housing.

In an embodiment of the vision system, at least one of the first and the second entrance window section comprises a filtering means for filtering out light in a defined frequency bandwidth, which filtering means moves in unity with the at least one of the first and second entrance window section.

In case the filtering means is provided with the second entrance window section, the filtering means allows radiation emitted by the source of radiation to pass. The source may for example emit infrared light to improve view in dim or darkness in conjunction with the second entrance window section.

The first entrance window section will usually be provided with a filtering means for filtering out infrared light for improving images obtained by the image capturing device during daylight conditions.

In general filtering means for filtering out light in a defined frequency bandwidth are known per se to the person skilled in the art.

In an embodiment of the vision system, the filtering means is applied to the first and/or second entrance window section using an optical bonding process. An optical bonding process means a way of bonding which causes no entrance loss for the entrance window. As an option the filtering means is applied to the first and/or second entrance window section using an atomic layer deposition process. The atomic layer deposition process allows to apply the filtering means to a curved entrance window section. Preferably, a transparent protection layer, like a thin layer of glass, extends over the filtering means. The protection layer is preferably hydrophopic.

In an embodiment, the filtering means is applied to the second entrance window section by way of a carrier like a thin layer of glass and connected to the first and/or the second entrance window section.

In an embodiment, the image capturing device and the entrance window are arranged such that the devices are aligned with the central axis. This provides identical entrance conditions for radiation independent of the position of the second housing part with respect to the image capturing device.

As an option, the second housing part is gastight coupled with the first stationary housing part for filling the housing with gas, preferably for filling the housing with gas at an overpressure.

In an embodiment of the vision system, the second housing part extends around the image capturing device.

In an embodiment of the vision system, the second housing part is provided with a curvature.

In an embodiment of the vision system, the second housing part extends circumferential around the image capturing device, and preferably the entrance window extends circumferential around the image capturing device.

In an embodiment of the vision system, the entrance window has a cylindrical shape having a circular or polygonic cross section. The polygonic cross section enables to provide a flat entrance window for the image capturing device.

The invention further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantageous advantages.

### Description of the drawings

The invention will be further elucidated referring to the schematic drawings wherein shown in:
Fig. 1 in exploded view a vision system according to the invention;
fig. 2 a detail of a further embodiment of the vision system of fig. 1;
fig. 3a in top view a cross section of the vision system of fig. 1;
and 3b in top view a cross section of a further embodiment of the vision system of fig. 1;
fig. 4 a schematic view of a control system for the vision system.

### Detailed description of embodiments

In the figures, a housing 1 is shown. The housing 1 is suitable for a camera system 2, which is an example of an image capturing device. The housing 1 comprises a first stationary housing part 3. The first stationary housing part 3 is coupled to for instance a vehicle (not shown), specifically the side, front or back of truck. The first stationary housing part 3 is mounted with the truck by means of a bracket (not shown).

The housing 1 comprises a second housing part 4. The second housing part 4 is movably coupled with the first stationary housing part 3. Here, the second housing part 4 is rotatable coupled with the first stationary housing part 3 around a central axis of rotation 8. The second housing part 4 extends around the first stationary housing part 3, specifically extends circumferential around the first stationary housing part 3, more specifically substantially encloses the first stationary housing part 3. In this case, the second housing part 4 comprises an adjusting ring, a cylindrical tube 14, and a lid 15, all mutually coupled for forming the second housing part 4.

The housing 1 extends along the central axis 8. Here, the first stationary housing part 3 substantially extends in the interior of the second housing part 4. The first stationary housing part 3 and the second housing part 4 are coupled and constitute the housing 1 for accommodating a camera module 2 therein. The camera system 2, that is the image capturing device, is mounted on the first stationary housing part 3. The first stationary housing part 3 and the second housing part 4 are coupled in a rotatable manner. The second housing part 4 is rotatable around the central axis 8. The first stationary housing part 3 and the second housing part 4 are coupled at their respective ends facing towards the bracket (not shown).

As an option, the first stationary housing part 3 and the second housing part 4 may be gastight coupled for accommodating a camera module 2 in the housing 1 at an overpressure.

The second housing part 4 comprises a transparent portion 6, 7. The transparent portion 6, 7 is also referred to as entrance window. The transparent portion 6, 7 is formed by the cylindrical tube 14 being partly or entirely transparent. The transparent portion 6,7 extends substantially parallel with respect to the aperture of the camera system 2.

The second housing part 4 being moveable with respect to the first stationary housing part 3 beneficially provides the ability to clean the transparent portion 6, 7 while at the same time keeping the amount of layers between the camera module 2 and an object to be captured at a minimum. Entrance losses are minimized because there is just the transparent cylindrical tube wall 14 between the camera module 2 and the image to be captured. In this connection entrance losses are the loss caused by the housing 1 in terms of light captured by the camera module 2.

A drive 5 is provided for rotating the second housing part 4 around the central axis 8.

The vision system comprise a source of radiation 11 for radiating the field of view. The source 11 may for example emit infrared light to provide view in dim or darkness in conjunction with a second entrance window section 7. The source 11 of radiation is arranged for allowing at least a part of emitted radiation to affect directly on the image capturing device 2 through the entrance window 6, 7. The source of radiation is here arranged in the interior of the housing 1. It will be clear that the source of radiation can also be arranged at the exterior of the housing.

The entrance window has a first 7 and a second 6 entrance window section. The first entrance window section 7 is suitable for use during daylight conditions. The second entrance window section 6 is suitable for use in dim or darkness in conjunction with the source of radiation 11. In general, it is known per se to a person skilled in the art how to provide an entrance window suitable for use during daylight conditions and how to provide an entrance window suitable for use in dim or darkness in conjunction with the source of radiation 11. The first and second entrance window sections are arranged with respect to the housing moving direction such that the first and second entrance window sections extend alternately over the image capturing device upon moving the second housing part 4 for allowing an image to be captured by the image capturing device 2 through alternately the first entrance window section 7 or the second entrance window section 6 as desired depending on light conditions.

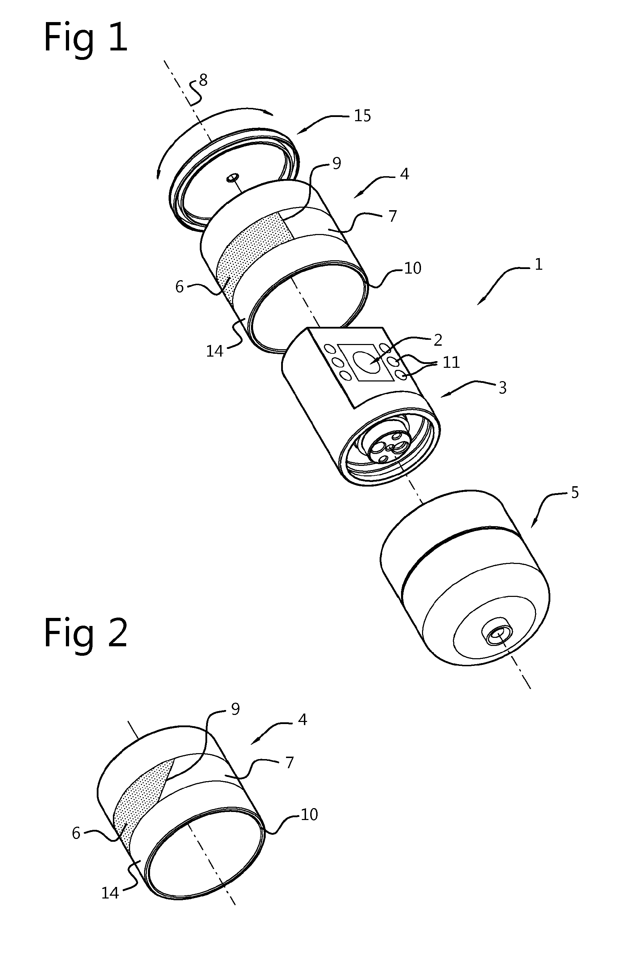

The transition between the first 7 and the second 6 entrance window section may be straight with respect to the housing moving direction, as shown in fig. 1, see line 9.

Alternatively, the transition between the first 7 and the second 6 entrance window section may be oblique with respect to the housing moving direction, as shown in fig. 2, see line 9. This oblique transition may provide a gradual transition.

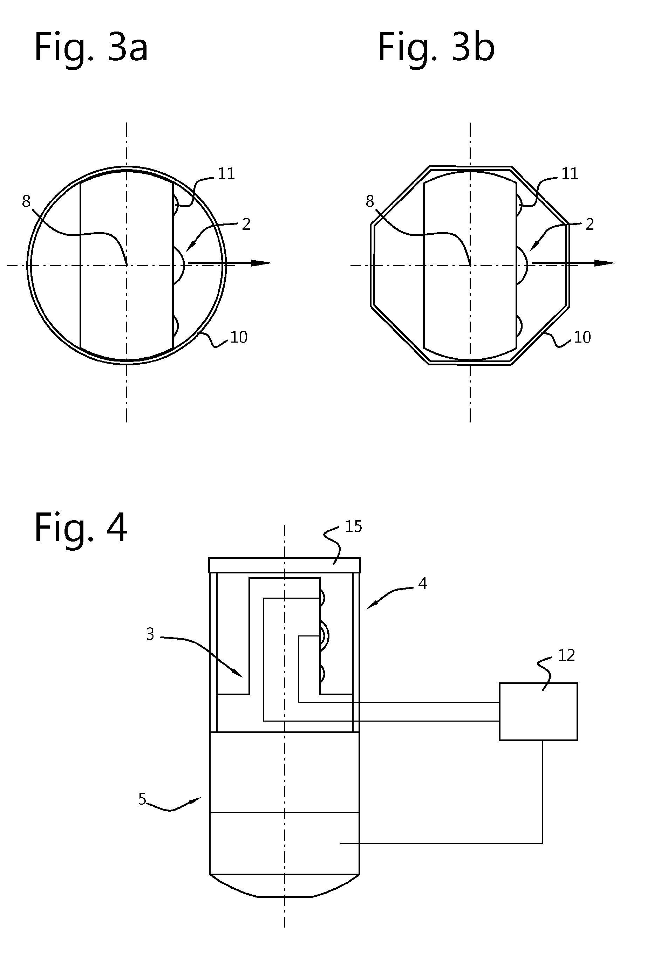

Seen in cross section, the entrance window may have a cylindrical shape having a circular cross section, as shown in fig. 3a or polygonic cross section as shown in fig. 3b.

Fig. 4 shows a schematic view of a control system for the vision system 1. The vision system has a control unit 12. The control unit is coupled with the driving device 5 for controlling the position of the entrance window 6,7. Also, the source of radiation 11 is operationally coupled with the control unit 12. In addition, the image capturing device 2 is operationally coupled with the control unit 12 for providing a control signal from the image capturing device to the control unit 12. Based on this control signal the control unit 12 drives or stops driving the second housing part 4.

In use, the image capturing device 2 continuously captures images to provide streaming video to a driver. While capturing images, the image capturing device 2 also detects the available light. Through its coupling with the control unit 12, depending on the light circumstances, the source of radiation 11 may be switched on or off. In addition, through the coupling of the image capturing device 2 with the control unit 12 the driving device 5 may be operated to position one of the first and second entrance window sections over the image capturing device as desirable depending on the light conditions.

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Vision system (1) for providing exterior view for a vehicle driver, the system comprising;
- an image capturing device (2) for capturing images in a field of view,
- a housing for accommodating the image capturing device therein, the housing comprising a first stationary housing part (3) and a second housing part coupled with the first stationary housing part for accommodating the image capturing device in the housing, and wherein the second housing part comprises an entrance window (4) for allowing an image to be captured by the image capturing device, and wherein the second housing part is moveable coupled with the first stationary housing part, and movable in a housing moving direction around a central axis (8),
- a driving device (5) coupled with the housing for moving the second housing part with respect to the first housing part in the housing moving direction and positioning the second housing part with respect to the image capturing device,
- a source of radiation (11) for radiating the field of view,
and wherein the entrance window comprises at least a first (7) and a second (6) entrance window section wherein the first entrance window section is suitable for use during daylight conditions and the second entrance window section is suitable for use in dim or darkness in conjunction with the source of radiation, and wherein the at least first and second entrance window sections are arranged with respect to the housing moving direction such that the at least first and second entrance window sections extend alternately over the image capturing device upon moving the second housing part for allowing an image to be captured by the image capturing device through alternately the first entrance window section or the second entrance window section.

2. Vision system according to claim 1, comprising a control unit (12) coupled with the driving device for controlling the position of the entrance window, wherein the image capturing device is operationally coupled with the control unit for providing a control signal from the image capturing device to the control unit.

3. Vision system according to claim 1 or 2, wherein the source of radiation is operationally coupled with the control unit, and the source of radiation is arranged for allowing at least a part of emitted radiation to affect directly on the image capturing device.

4. Vision system according to a preceding claim, wherein the source of radiation is arranged in the interior of the housing.

5. Vision system according to a preceding claim, wherein the source of radiation is arranged exterior with respect to the housing.

6. Vision system according to a preceding claim, wherein at least one of the first and the second entrance window section comprises a filtering means for filtering out light in a defined frequency bandwidth, which filtering means moves in unity with the at least one of the first and second entrance window section.

7. Vision system according to a preceding claim, wherein the filtering means allows radiation emitted by the source of radiation to pass.

8. Vision system according to a preceding claim, wherein the filtering means is applied to the first and/or second entrance window section using an optical bonding process.

9. Vision system according to claim 8, wherein the filtering means is applied to the first and/or second entrance window section using an atomic layer deposition process.

10. Vision system according to claim 8 or 9, wherein the filtering means is applied to the second entrance window section by way of a carrier like a thin layer of glass and connected to the first and/or the second entrance window section.

11. Vision system according to a preceding claim, wherein a transparent protection layer, like a thin layer of glass, extends over the filtering means, and wherein the protection layer is preferably hydrophopic.

12. Vision system according to a preceding claim, wherein the image capturing device and the entrance window are arranged such that the devices are aligned with the central axis.

13. Vision system according to a preceding claim, wherein the second housing part is gastight coupled with the first stationary housing part for filling the housing with gas, preferably for filling the housing with gas at an overpressure.

14. Vision system according to a preceding claim, wherein the second housing part extends circumferential around the image capturing device, and preferably the entrance window extends circumferential around the image capturing device.

15. Vision system according to a preceding claim, wherein the entrance window has a cylindrical shape having a circular or polygonic cross section.
